# EUROPEAN PATENT APPLICATION

(11) **EP 3 496 234 A1**
(43) Date of publication of application: **12.06.2019**
(21) Application number: 18204683.9
(22) Date of filing: 06.11.2018
(51) Int. Cl.: H02K 1/24, H02K 19/10, H02K 7/18

(54) **SWITCHED RELUCTANCE MACHINE**

(30) Priority: 06.12.2017 GB 201720313
(71) Applicant: Rolls-Royce plc, London SW1E 6AT (GB)
(72) Inventor: Ramakrishna, Shanmukha, Derby, Derbyshire DE24 8BJ (GB); Chong, Ellis, Derby, Derbyshire DE24 8BJ (GB)
(74) Representative: Rolls-Royce plc

(57) **Abstract**

A switched reluctance machine includes a stator (30) comprising a core with a yoke portion and teeth (31) carrying coils (32) and a coaxial variable reluctance rotor (40) having poles (41) without coils. The reluctance of the rotor-to-stator magnetic flux path varies with the rotor position. Each pole (41) comprises first side flank (leading edge), a second side flank (trailing edge) and a tip surface arcing from the leading edge to the trailing edge and facing the stator with an air gap there between. Further, each pole (41) contains one or more cavities (42, 43). Each or the cavity (42,43) is offset, thus closer to one side flank, and it is completely covered by the arc of the tip surface.

## Description

### Field of the Present Disclosure

The present disclosure relates to a switched reluctance machine.

### Background

Switched reluctance machines (SRMs) have attracted considerable interest for high-performance drive applications due to their high torque density, simplicity, fault-tolerance, robustness and low manufacturing cost. With no need for permanent magnets and induction windings on the rotor, SRMs can operate reliably in harsh and high temperature environments. This makes SRMs a candidate for aerospace applications, such as embedded electrical machines in the gas turbine.

However, SRMs have an inherent disadvantage of relatively high torque ripple. This in turn can produce relatively high noise and vibration levels. Torque ripple can be especially pronounced at low machine speed, and can thus be problematic if an SRM is used for electrically starting a gas turbine.

### Summary

Accordingly, in a first aspect, the present disclosure provides a switched reluctance machine including:
a stator having a circumferential row of magnetically energizable teeth carrying coil windings; and
a coaxial variable reluctance rotor having a circumferential row of magnetisable poles, the reluctance of the rotor-to-stator magnetic flux path varying with rotor position;
wherein each pole has first and second side flanks and a tip surface, one of the side flanks forming a leading edge surface of the pole, the other side flank forming an opposite, trailing edge surface of the pole, and the tip surface arcing from the leading edge surface to the trailing edge surface and facing the stator to form an air gap to the teeth of the stator, and wherein each pole contains one or more cavities, the or each cavity being offset such that it is closer to one of the side flanks than the other side flank, and being located such that it is completely covered by the arc of the tip surface.

Advantageously, modifying the inductance profile of the poles by providing the one or more offset cavities enables a beneficial modification of the torque profile to be obtained. Moreover, by ensuring that the or each cavity is located such that it is completely covered by the arc of the tip surface, the air gap between the stator and the rotor can be left unaffected by the cavities.

In a second aspect, the present disclosure provides a gas-turbine engine including the switched reluctance machine according to the first aspect.

Optional features of the present disclosure will now be set out. These are applicable singly or in any combination with any aspect of the present disclosure.

The tip surface may be configured such that the air gap spacing to the teeth of the stator is substantially constant as the poles, in use, sweep past the teeth. This can help to improve machine performance.

Each pole may be asymmetrical about a radial line which extends down the centre of each pole.

Each cavity may extend into the pole from the leading edge surface of the pole or the trailing edge surface of the pole.

Each cavity may extend circumferentially inwards from the leading edge surface or the trailing edge surface of the pole, , the cavity shaped so that portions of the leading or trainling edge surface extend in the radial direction towards the tip of the pole and towards the base of the rotor.

Each cavity may have two edges which extend in the circumferential direction that intersect with the leading or trailing edge. The spacing of the two edges at the interaction with the leading or trailing edge may define a width of the cavity opening. The width of the cavity opening may be between 70% and 10% or between 15% 55% of the length of the pole in the radial direction. The one or two of the cavity edges may be aligned with the circumferential direction.

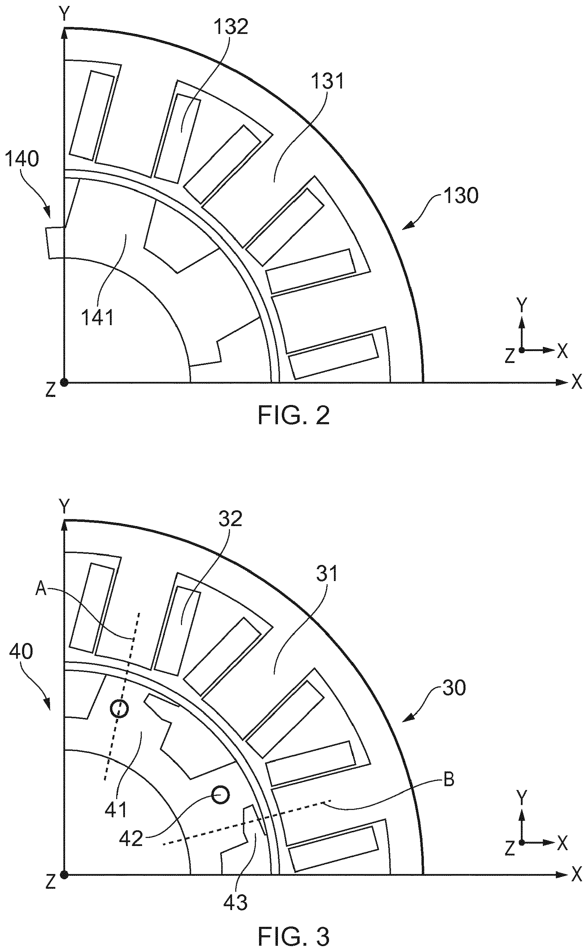

Each cavity may extend from the trailing or leading edge between 25% and 50% of the length of the pole. The length of the pole is measured from its base to tip in the radial direction, and in a regular shaped pole (e.g. as shown in figure 2) this may be the equivalent of the length of the leading or trailing edge.

The radially outermost intersection of the cavity edge and leading or trailing edge may be positioned at between 60% and 99%; or between 75% and 95% of the length of the leading or trailing edge from the base of the pole to the tip surface of the pole.

In embodiments, each pole may comprise a single cavity (i.e. a slot) and a single hole.

A pole may comprise a hole and a cavity extending from a flank of the pole. The or each cavity may extend from a trailing edge of the pole.

The rotor may additionally comprise a hole which on a transverse cross-section through the machine is completely internal to the pole. Each pole may have first and second of the holes, the first hole being closer to the first side flank and the second hole being closer to the second side flank.

Additionally or alternatively, at least one of the one or more cavities may be a slot, which extends circumferentially from a slot/cavity opening at one of the side flanks. The circumferential extent of the cavity may be between 10% and 80% or between 20% and 70% or between 25% and 50% or between 30% and 45% of the angular width of the respective pole. The or each pole may have first and second of the slots, the first slot extending from the first side flank and the second slot extending from the second side flank.

Each pole may have a first and second of the cavities, the first cavity being closer to the first side flank and the second cavity being closer to the second side flank. Moreover, the ratio of the number of stator teeth to the number of rotor poles be between 1.2:1 to 1.8:1; or between 1.3:1 to 1.7:1; or between 1:4:1 to 1:6:1; or between 1:45:1 to 1:55:1; or be 1.5:1. In this case, the first and second cavities may be located such that when the first cavity of a given pole is aligned with the centre of a given stator tooth, the second cavity of the neighbouring pole to the side of the second side flank of the given pole is aligned with the centre of the stator tooth which is the next-but-one stator tooth from the given stator tooth.

More generally, the switched reluctance machine can have integral or fractional slot winding.

The one or more cavities may be configured to increase the sinusoidal characteristics of the derivatives of self-inductance relative to an otherwise identical rotor without the cavities.

The one or more cavities may be configured to reduce the time-averaged values of the derivatives of mutual inductance relative to an otherwise identical rotor without the cavities.

### Brief Description of the Drawings

Embodiments of the present disclosure will now be described by way of example with reference to the accompanying drawings in which:
Figure 1 shows a longitudinal cross-section through a ducted fan gas turbine engine;
Figure 2 shows a finite element (FE) geometry on a transverse cross-section through a switched reluctance machine (SRM) having a conventional switched reluctance rotor;
Figure 3 shows the FE geometry on a transverse cross-section through an SRM having a modified switched reluctance rotor;
Figure 4 shows modelled torque waveforms for the SRMs of Figures 2 and 3;
Figure 5A shows calculated three-phase derivatives of self-inductance for a conventional six tooth, four pole SRM; Figure 5B shows the conventional SRM's three-phase derivatives of mutual inductance; Figure 5C shows calculated three-phase derivatives of self-inductance for a modified six tooth, four pole SRM; and Figure 5D shows the modified SRM's three-phase derivatives of mutual inductance; and
Figure 6 to 11 shows FE geometries on transverse cross-sections through respective variant SRMs having the modified switched reluctance rotor.

### Detailed Description and Further Optional Features

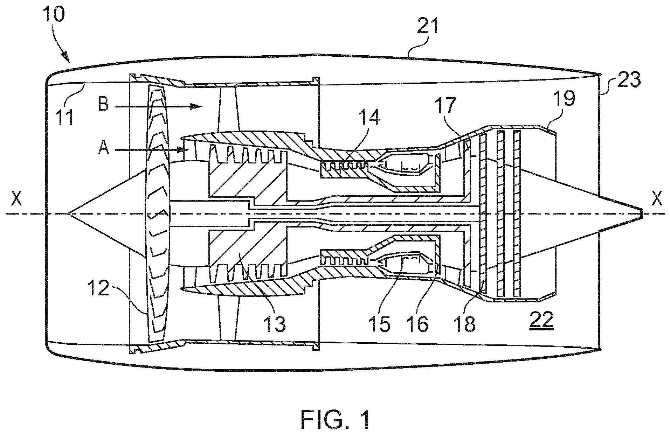

With reference to Figure 1, a ducted fan gas turbine engine is generally indicated at 10 and has a principal and rotational axis X-X. The engine comprises, in axial flow series, an air intake 11, a propulsive fan 12, an intermediate pressure compressor 13, a high-pressure compressor 14, combustion equipment 15, a high-pressure turbine 16, an intermediate pressure turbine 17, a low-pressure turbine 18 and a core engine exhaust nozzle 19. A nacelle 21 generally surrounds the engine 10 and defines the intake 11, a bypass duct 22 and a bypass exhaust nozzle 23.

During operation, air entering the intake 11 is accelerated by the fan 12 to produce two air flows: a first air flow A into the intermediate-pressure compressor 13 and a second air flow B which passes through the bypass duct 22 to provide propulsive thrust. The intermediate-pressure compressor 13 compresses the air flow A directed into it before delivering that air to the high-pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the nozzle 19 to provide additional propulsive thrust. The high, intermediate and low-pressure turbines respectively drive the high and intermediate-pressure compressors 14, 13 and the fan 12 by suitable interconnecting shafts.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

The gas turbine engine has at least one SRM. For example, an SRM may operate as a generator powered by one of the above-mentioned interconnecting shafts, or as a starter motor.

The SRM includes a stator having a circumferential row of magnetically energizable teeth carrying coil windings, and a coaxial variable reluctance rotor having a circumferential row of magnetisable poles, the reluctance of the rotor-to-stator magnetic flux path varying with rotor position.

Finite element (FE) analyses were performed to identify modifications to the poles that could be made in order to reduce torque ripple and improve the electromagnetic performances of the SRM, while keeping the stator unchanged. In particular, the FE analyses focused on asymmetries, and specifically offset cavities, that could be introduced into the rotor poles.

Shaping the rotor poles by introducing offset cavities can modify the inductance profile and thence the torque profile. As a first step, magnetization characteristics and the torque profile of a conventional switched reluctance rotor without offset cavities was obtained by FE modelling. Next, cavity parameters were defined in modified rotors with the aim of reducing torque ripple. Finally, the conventional and modified rotors were compared, and the influence of the proposed offset cavities on torque ripple and other performance parameters were determined. An aim was to reduce torque ripple, noise and vibration and to improve torque density characteristics.

Figure 2 shows the FE geometry on a transverse cross-section through an SRM having a conventional switched reluctance rotor. The conventional SRM has a stator 130 with teeth 131 and coil windings 132, and a rotor 140 with magnetisable poles 141. Figure 3, by contrast, shows the FE geometry on a transverse cross-section through an SRM having a modified switched reluctance rotor. The modified SRM has a stator 30 with teeth 31 and coil windings 32, and a rotor 40 with magnetisable poles 41. However, in contrast to the symmetric poles 141 of the conventional SRM, the poles 41 of the modified SRM are asymmetric about the radial line which extends down the centre of each pole. More particularly, each pole 41 has first and second side flanks, one of the side flanks forming a leading edge surface of the pole and the other side flank forming an opposite, trailing edge surface of the pole. These side flanks can be symmetrical. The pole also has a tip surface which arcs from the leading edge surface to the trailing edge surface and faces the stator to form an air gap to the teeth of the stator. However, unlike the conventional SRM, the pole further contains a hole 42 closer to one of the side flanks, and a cavity in the form of a slot 43 extending circumferentially from a slot opening at the other side flank. Although the hole and slot are differently shaped, they have in common that each is completely within the angular extent of the arc of the tip surface. This restriction on the location of the cavities relative to the tip surface distinguishes the slot from e.g. a mere cut-out in the side flank and tip of the pole. Moreover, it is consistent with maintaining a tip profile for the pole which is substantially unchanged from that of a pole of the conventional rotor. This allows the air gap spacing to the teeth of the stator to be maintained at a substantially constant value as the poles, in use, sweep past the teeth, which is beneficial for machine performance.

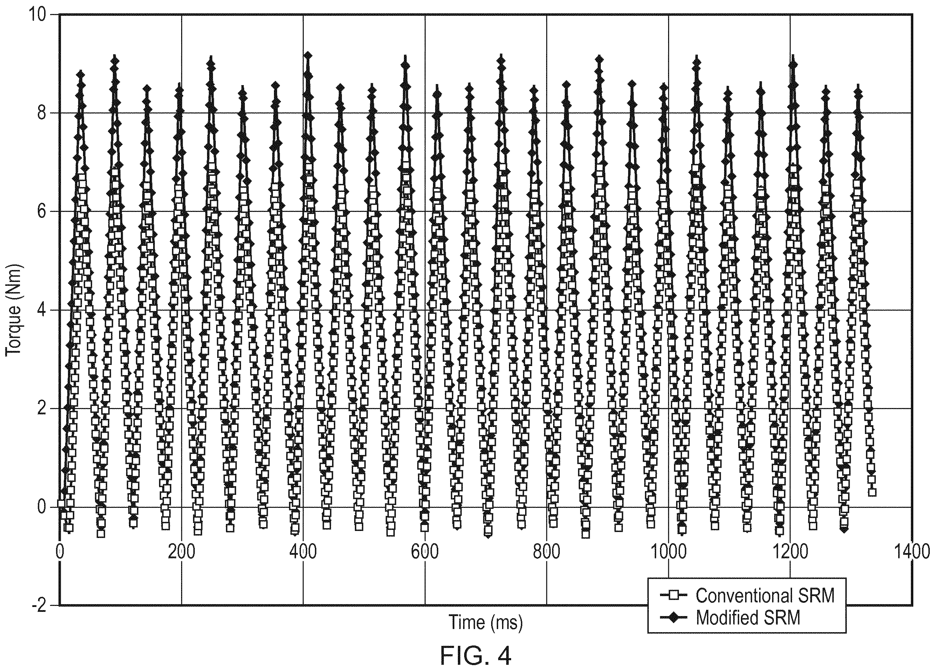

The FE analyses modelled a power supply consisting of three-phase sine wave currents, and compared average torque and torque ripple. The analyses showed that the cavities 42, 43 are able to modify the magnetic flux paths so as to make the derivatives of self-inductance waveforms more sinusoidal. In this way, the acoustic noise and the torque ripple can be reduced. Figure 4 shows for example modelled torque waveforms for the SRMs of Figures 2 and 3. Results of deformation modelling and von Mises stress modelling also show that the cavities do not introduce any significant mechanical deformation of the shape of the poles 41. For best performance, the circumferential extent of the slot can be between 25% and 50% of the total angular width of its pole.

The modification to the rotor shape by the introduction of the cavities aimed to reduce the fringing flux and produce a smoother inductance profile. The variation of the inductance by the modified region affects the produced torque and makes the current increase nonlinearly. The nonlinear produced torque is the main cause of torque ripple. When the torque of each phase is added up, the summed torque in the overlap region is reduced, although the time-averaged torque is not decreased.

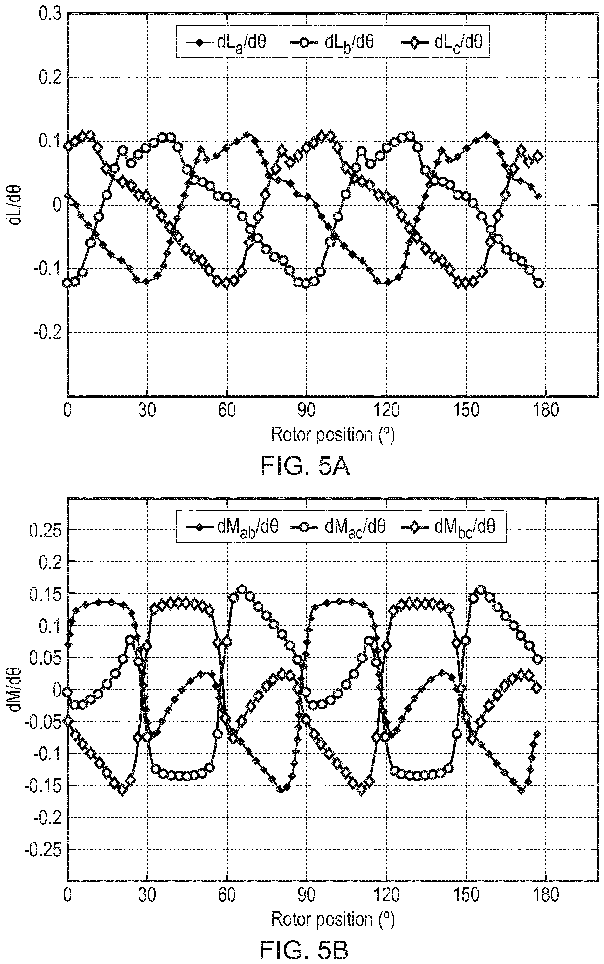

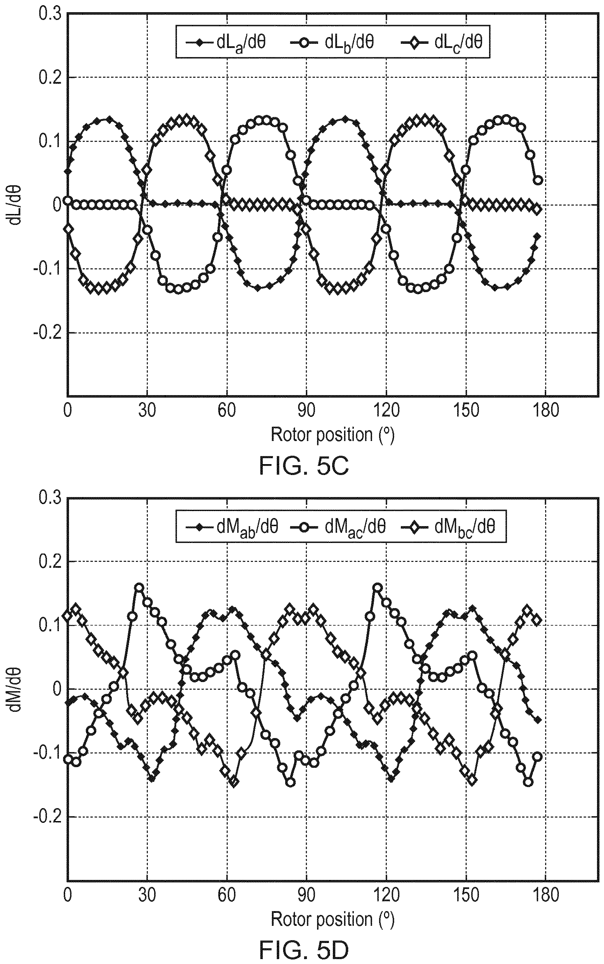

Figure 5A shows calculated three-phase derivatives of self-inductance for a conventional six tooth, four pole SRM, and Figure 5B shows the conventional SRM's three-phase derivatives of mutual inductance. By contrast, Figure 5C shows calculated three-phase derivatives of self-inductance for a modified six tooth, four pole SRM, and Figure 5D shows the modified SRM's three-phase derivatives of mutual inductance. Advantageously, the derivatives of self-inductance shown in Figure 5C have increased sinusoidal characteristics compared to those shown in Figure 5A. Moreover, although the derivatives of mutual inductance shown in Figure 5D have decreased sinusoidal characteristics compared to those shown in Figure 5B, their time-averaged values are reduced, which is also beneficial.

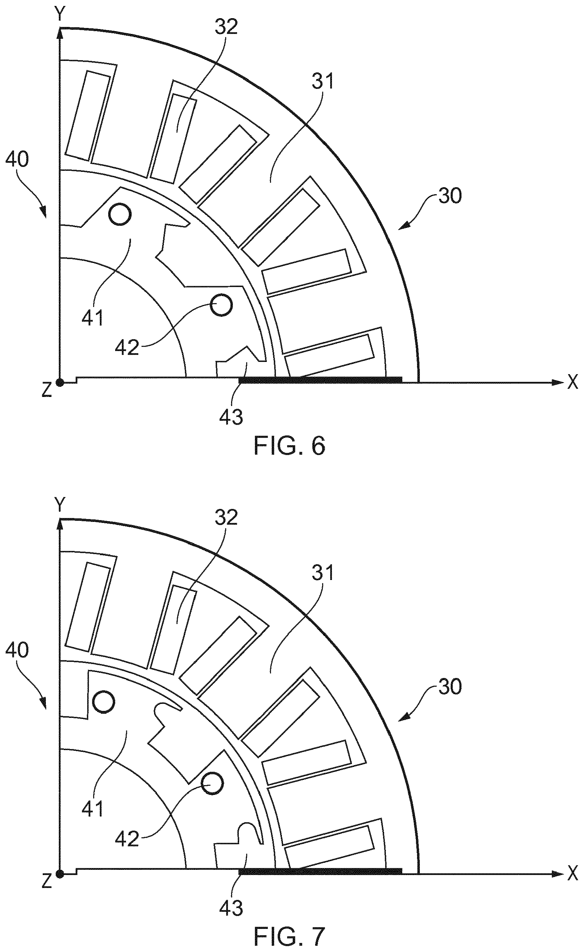

In order to reduce the torque ripple and to smooth the torque profile, the inductance profile preferably changes gradually as the rotor poles 41 and stator teeth 31 move into alignment. To increase the reluctance of the flux path is to increase the saturation at the tip of the rotor poles. The maximum rate of inductance change happens when the alignment between the rotor and stator poles begins. So, in this position the rotor reluctance can be increased to cause a smoother inductance change. This gradual change can be promoted by inclining the rotor poles in the direction of rotation so that they have asymmetrical side flanks, as illustrated in Figure 6 which shows the FE geometry on a transverse cross-section through a variant SRM having the modified switched reluctance rotor. The benefit of pole shaping is only obtained in one direction of rotation (clockwise in this example). Noteworthy also, in this variant the slot 43 is significantly less re-entrant than the example of Figure 3, but nonetheless is still within the angular extent of the arc of the tip surface. Other slot shapes can be used with an inclined rotor pole.

Figure 7 shows the FE geometry on a transverse cross-section through another variant SRM having the modified switched reluctance rotor. In this variant, the side flanks of the poles 41 are symmetrical but relatively divergent. This allows the hole 42 and the slot 43 to be spaced further apart, which can help to reduce stresses and deformations produced by the cavities.

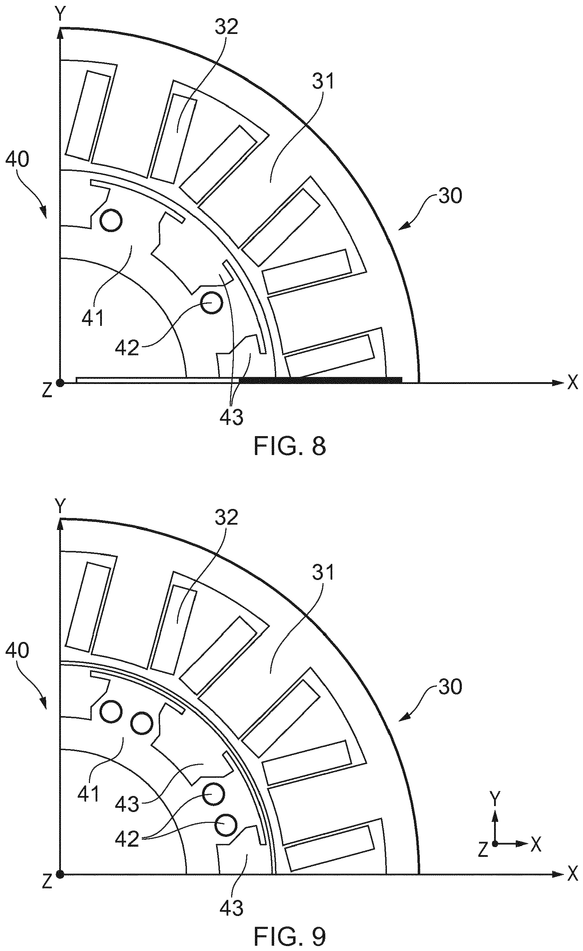

Increasing the number of cavities can be beneficial for performance. Thus Figures 8 and 9 show the FE geometries on respective transverse cross-sections through further variant SRMs having the modified switched reluctance rotor. In the Figure 8 variant each pole 41 has one hole 42 and two slots 43, while in the Figure 9 variant each pole 41 has two holes 42 and two slots 43. In each case, the additional hole/slot is still located such that it is closer to one of the side flanks of its pole than the other side flank.

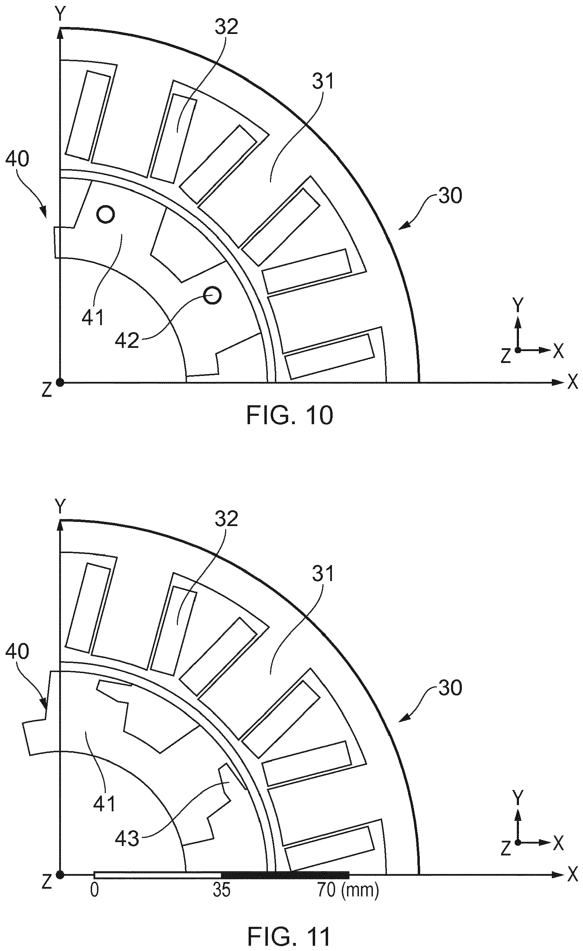

Improvements in performance can also be obtained even if each pole 41 has only one cavity 42, 43. Thus Figures 10 and 11 show the FE geometries on respective transverse cross-sections through further variant SRMs having the modified switched reluctance rotor. In the Figure 10 variant each pole 41 has just one hole 42, while in the Figure 11 variant each pole 41 has just one slot 43.

The SRMs of Figures 3 and 6 to 11 all have a ratio (winding factor) of the number of stator teeth 31 to the number of rotor poles 41 of 1.5:1. Such a winding factor is commonly used in SRMs, but the modification to the rotor pole described above can be applied to SRMs having other winding factors. For example a ratio (winding factor) of 1.33:1 is known, with a common SRM design having 8 stator teeth 31 and 6 rotor poles 41. Ratios (winding factors) less than one are also known, for example 0.75:1, 0.6:1 and 0.43:1.

However, when the winding factor is close to or substantially 1.5, there are further improvements of current, torque and fault tolerance. Further benefits are achievable when the poles 40 have at least two (first and second) cavities or at least a hole and a cavity (slot), adjacent opposite side flanks to reduce the torque ripple, the two cavities (or a hole and a cavity) can advantageously be located such that when the first cavity of a given pole is aligned with the centre of a given stator tooth, the second cavity of the neighbouring pole to the side of the second side flank of the given pole is aligned with the centre of the stator tooth which is the next-but-one stator tooth from the given stator tooth. Such an arrangement is illustrated, for example, in Figure 3, where the hole 42 of one pole lies on dashed radial line A through the centre of one stator tooth 31, while the slot 43 of the next pole lies on dashed radial line B through the centre of the next-but-one stator tooth.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

## Claims

1. A switched reluctance machine including:
a stator (30) having a circumferential row of magnetically energizable teeth (31) carrying coil windings (32); and
a coaxial variable reluctance rotor (40) having a circumferential row of magnetisable poles (41), the reluctance of the rotor-to-stator magnetic flux path varying with rotor position;
wherein each pole has first and second side flanks and a tip surface, one of the side flanks forming a leading edge surface of the pole, the other side flank forming an opposite, trailing edge surface of the pole, and the tip surface arcing from the leading edge surface to the trailing edge surface and facing the stator to form an air gap to the teeth of the stator, and wherein each pole contains one or more cavities (42, 43), the or each cavity being offset such that it is closer to one of the side flanks than the other side flank, and being located such that it is completely covered by the arc of the tip surface.

2. The switched reluctance machine of claim 1, wherein the tip surface is configured such that the air gap spacing to the teeth of the stator is substantially constant as the poles, in use, sweep past the teeth.

3. The switched reluctance machine of claim 1 or 2, wherein each pole further comprises a hole (42) which on a transverse cross-section through the machine is completely internal to the pole.

4. The switched reluctance machine of claim 3, wherein each pole has first and second of the holes, the first hole being closer to the first side flank and the second hole being closer to the second side flank.

5. The switched reluctance machine of any one of the previous claims, wherein at least one of the one or more cavities is a slot (43), which extends circumferentially from a slot opening at one of the side flanks.

6. The switched reluctance machine of claim 5, wherein the circumferential extent of the slot is between 25% and 50% of the angular width of the respective pole.

7. The switched reluctance machine of claim 5 or 6, wherein each pole has first and second of the slots, the first slot extending from the first side flank and the second slot extending from the second side flank.

8. The switched reluctance machine of any one of the previous claims, wherein:
each pole has a first and a second of the cavities, the first cavity being closer to the first side flank and the second cavity being closer to the second side flank;
the ratio of the number of stator teeth to the number of rotor poles is 1.5:1; and
the first and second cavities are located such that when the first cavity of a given pole is aligned with the centre of a given stator tooth, the second cavity of the neighbouring pole to the side of the second side flank of the given pole is aligned with the centre of the stator tooth which is the next-but-one stator tooth from the given stator tooth.

9. The switched reluctance machine of any one of the previous claims, wherein the one or more cavities are configured to increase the sinusoidal characteristics of the derivatives of self-inductance relative to an otherwise identical rotor without the cavities.

10. The switched reluctance machine of any one of the previous claims, wherein the one or more cavities are configured to reduce the time-averaged values of the derivatives of mutual inductance relative to an otherwise identical rotor without the cavities.

11. A gas-turbine engine (10) including the switched reluctance machine according to any one of the previous claims.
